# EUROPEAN PATENT SPECIFICATION

(11) **EP 1 770 953 B1**
(45) Date of publication and mention of the grant of the patent: **10.07.2019**
(21) Application number: 06254933.2
(22) Date of filing: 25.09.2006
(51) Int. Cl.: H04L 29/06, B61L 15/00

(54) **SYSTEM AND METHOD FOR PROVIDING ACCESS TO WIRELESS RAILROAD DATA NETWORK**
SYSTEME UND VERFAHREN ZUR BEREITSTELLUNG DES ZUGRIFFS AUF EIN DRATHLOSES EISENBAHNDATENNETZWERK
PROCÉDÉ ET MODULE D'AUTHENTIFICATION PERMETTANT L'ACCÉS À UN RÉSEAU FERROVIAIRE DE DONNÉES SANS FIL

(30) Priority: 30.09.2005 US 239861
(43) Date of publication of application: 04.04.2007
(73) Proprietor: ALSTOM Transport Technologies, 93400 Saint-Ouen (FR)
(72) Inventor: Davenport, David Michael, Niskayuna, NY 12309 (US)
(74) Representative: Lavoix

(56) References cited:
- WO-A2-01/26334
- CN-Y- 2 721 477

## Description

### BACKGROUND

The invention relates generally to a rail network system, and in particular to a system for providing access to a wireless railroad data network, and a method for accessing a wireless railroad data network using such a system.

CN 2 721 477 Y discloses a method and system according to the preamble of claims 1 and 4.

WO 01/26334 A2 discloses Wireless Integrated Network Sensor (WINS) nodes providing distributed network and Internet access to embedded sensors and controls.

A railroad is a geographically dispersed network including railway tracks, signaling equipments, train inspection equipment, rail crossings, trains, and so forth. Over the years, substantial investments have been made in communication technology to enable automation and pooling of data from a variety of network sources. Data may be transferred to a centralized computer system from train and engine crews, wayside and onboard fault detectors, inspection and reporting systems, train/wayside data exchange systems, and so forth. Through such transmission and integration, data is shared, analyzed, and may be used to improve efficiency and customer service. By gathering more information, it may be possible to make better operation decisions, increase asset utilization, and meet customer expectations.

Detailed information enhances railroad productivity. For example, with locomotive and wayside monitoring, it may be possible to determine reliability of mechanical components, wheels, bearing, or the like. Preventive maintenance of the locomotive components may be done before failure occurs. In another example, it may be possible to collect condition and fuel information of the locomotives, and monitor where the locomotives are and how much time the locomotives are used in specific locations. Moreover, such data may be used to determine reasons for breakdown/failure of the locomotives at specific locations.

Railroads also realize wireless systems using commercially available communication platforms such as radiofrequency bands, laptops, hand held computers, such as personal digital assistants, TCP/IP protocols, and so forth. For example, wireless systems may be deployed to facilitate exchange of data between moving trains and wayside locations. Access to such wireless networks needs generally to be limited to intended users to avoid theft of data and also to prevent failure modes of the wireless networks resulting from intentional or unintentional interference. Conventionally, network security mechanisms using passwords and encrypted keys are used to limit access to wireless networks. However, network security mechanisms using passwords and encrypted keys require relatively complex management and key distribution to users, for example trains and wayside equipments. These key management and distribution tasks are complicated by the geographic extent of the railroad network. Furthermore, the assets to which keys are to be provided and managed, lack human intervention. That is to say, a human may not be present at the wayside equipment or on each locomotive in a train to coordinate encryption key exchanges. Moreover, unauthorized and even malicious users may attempt to access the wireless networks by breaking the encryption mechanism from a remote location that is unintentionally within the wireless system's coverage area.

Accordingly, there is a need for a technique that provides secure access to a wireless railroad data network. In addition, a system for providing secure access to a wireless railroad data network is also desirable.

### BRIEF DESCRIPTION

In accordance with one embodiment of the present technique, a method for accessing a wireless railroad data network is provided. The method includes sensing presence of a rail vehicle on a rail track, and authenticating the rail vehicle to gain temporary access to the wireless railroad network based on sensed presence of the rail vehicle on the rail track. The rail vehicle is permitted temporary access to the wireless railroad data network based on sensed presence and authentication of the rail vehicle.

In accordance with another embodiment of the present technique, a method for monitoring rail vehicle operation via a wireless railroad data network is provided. The method includes sensing presence of a rail vehicle on a rail track, and authenticating the rail vehicle to gain temporary access to the wireless railroad data network based on sensed presence of the rail vehicle on the rail track. The rail vehicle is permitted temporary access to the wireless railroad data network based on sensed presence and authentication of the rail vehicle. At least one operating parameter relating to rail vehicle operation or a combination thereof is monitored by exchanging rail vehicle data with the wireless railroad data network. Information may also be provided to the train. Examples include work orders, temporary speed restrictions, etc.

In accordance with another embodiment of the present technique, a system for accessing a wireless railroad data network is provided. The system includes a detection circuitry configured to detect presence of a rail vehicle on a rail track. A network interface is configured to receive and transmit data on the rail vehicle. A wireless network access point is coupled to the detection circuitry and configured to provide temporary access to the network interface based on a signal from the detection circuitry.

In accordance with another embodiment of the present technique, a wireless railroad data network system is provided. The system includes a detection circuitry configured to detect presence of a rail vehicle on a rail track. A network interface is configured to receive and transmit data with the rail vehicle. A wireless network access point coupled to the detection circuitry and configured to provide temporary access to the network interface based on a signal from the detection circuitry. An electric power source is configured to supply electric power to the wireless network access point based on the signal from the detection circuitry.

### DRAWINGS

These and other features, aspects, and advantages of embodiments of the present invention will become better understood when the following detailed description, provided by way of example, is read with reference to the accompanying drawings in which like characters represent like parts throughout the drawings, wherein:
FIG. 1 is a diagrammatical view of a system for accessing wireless railroad data network in accordance with an exemplary embodiment of the present technique;
FIG. 2 is a diagrammatical view of a detection circuitry for detecting train presence on a rail track in accordance with aspects of FIG. 1;
FIG. 3 is a diagrammatical view of a direct current track circuit for detecting train presence on a rail track illustrating block unoccupied condition in accordance with aspects of FIG. 1;
FIG. 4 is a diagrammatical view of a direct current track circuit for detecting train presence on a rail track illustrating block occupied condition in accordance with aspects of FIG. 1;
FIG. 5 is a diagrammatical view of a system for accessing wireless railroad data network having a physical switch in accordance with an exemplary embodiment of the present technique;
FIG. 6 is a diagrammatical view of a system for accessing wireless railroad data network having a physical switch with a timer in accordance with an exemplary embodiment of the present technique;
FIG. 7 is a flow chart illustrating exemplary steps involved in accessing a wireless rail network in accordance with an exemplary embodiment of the present technique; and
FIG. 8 is a diagrammatical view of a system for accessing wireless railroad data network based on sensed presence of a locomotive on a rail track in accordance with an exemplary embodiment of the present technique.

### DETAILED DESCRIPTION

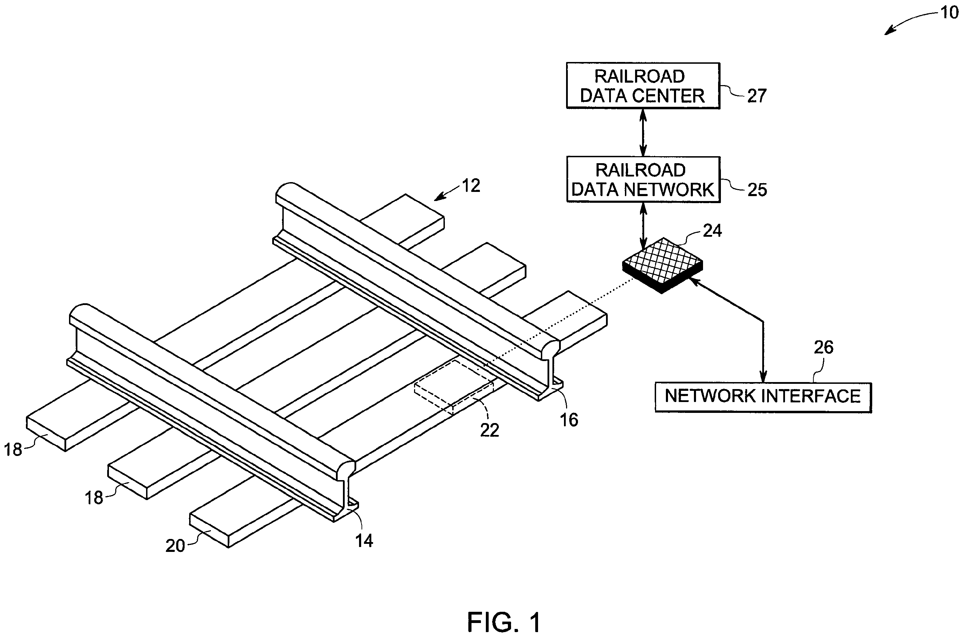

Referring now to FIG. 1, a wireless railroad data network system is illustrated, and represented generally by reference numeral 10. In the illustrated embodiment, the system 10 includes a railway track 12 having a left rail 14, a right rail 16, and a plurality of ties 18 extending between and generally transverse to the rails 14, 16. The ties 18 are coupled to the rails 14, 16 and provide lateral support to the rails 14, 16 configured to facilitate movement of vehicles, such a trains, trams, testing vehicles, or the like. The railway track 12 also includes an equipment container tie 20. FIG. 1 shows the equipment container 20 extending between the rails 14, 16 having hollowed regions configured to store vehicle detection circuitry 22. The equipment container 20 acts as a housing that protects and facilitates the installation of various components of the detection circuitry 22. However, in alternate embodiments, the various components can be disposed in individual housings that are independent of the equipment container 20. For example, portions of the vehicle detection circuitry 22 may be attached directly to the rails 14, 16 while the other portions may be located within the equipment container 20 positioned adjacent to the track.

A wireless network access point 24 is communicatively coupled to the detection circuitry 22 and to a railroad data network 25. A railroad data center 27 is also connected to the railroad data network 25 and located remotely from the wireless system 10. The wireless network access point 24 uses radio frequency, optical or other propagating (rather than conducted by wire) signals to communicate with a wireless network interface 26 on a locomotive or other rail vehicle. The network interface 26 is configured to exchange data between the wireless access point 24 and the rail vehicle. The rail vehicle data may include information pertaining to block occupancy detection, track signal status, distances to other trains, location of broken rails, distances to various rail locations, geographical information pertaining to rail locations, operating parameters of rail vehicles such as engine performance, weight of the rail vehicles, speed of the vehicles, fuel level, fuel pressure, or the like. The data exchanged with the rail vehicle may originate or terminate at the railroad data center 27.

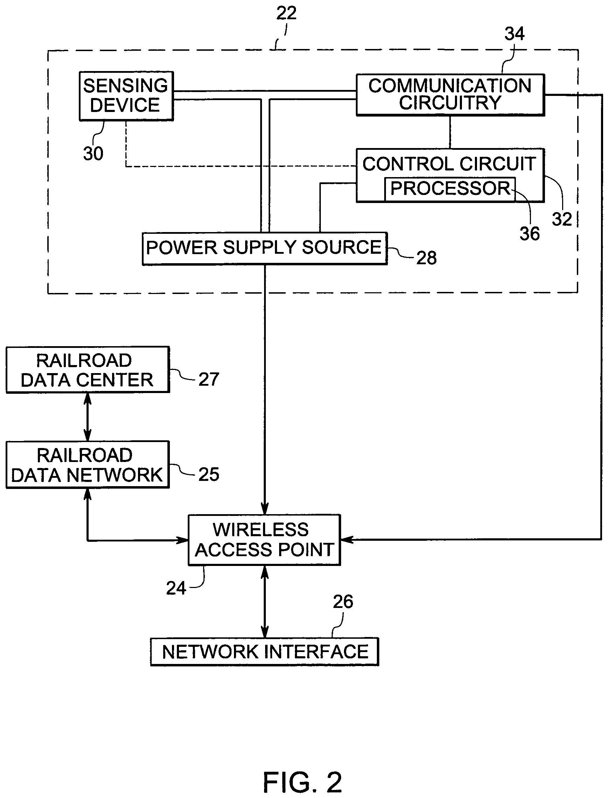

FIG. 2 illustrates the detection circuitry 22 for detecting rail vehicle presence on the railway track 12. The vehicle detection circuitry 22 includes a power supply 28, a sensing device 30, a control circuit 32, and communication circuitry 34 disposed within the equipment container 20. As appreciated by those skilled in the art, the power supply 28 may include any suitable supply, such as external power sources, batteries, a host of local power generation devices, or a combination thereof. In certain embodiments, circuitry 22 may include power conditioning circuitry configured to rectify and/or convert the power output from the power supply 28 to desired output power. In the illustrated embodiment, the power supply 28 is configured to supply electric power to the sensing device 30, the control circuit 32, communication circuitry 34, and the wireless access point 24. The sensing device 30 is coupled to the control circuit 32 which includes a processor 36 having hardware, circuitry and/or software that facilitates the processing of signals from the sensing device 26. The sensing device 30 may include a track circuit sensor, a wheel detector, a loop detector, or the like configured to detect presence of the rail vehicle on the railway track. The operation of the sensing device 30 is explained in greater detail with reference to subsequent figures. As will be appreciated by those skilled in the art, the processor 36 may include a range of circuitry types, such as a microprocessor, a programmable logic controller, a logic module, and so forth.

The communication circuitry 34 is configured to receive data signals output from the processor 36 and/or the sensing device 30 and to transmit the data signals to the wireless network access point 24. The communication circuitry 34 comprises hardware and/or software that facilitates communication of data signals by the communication circuitry 34 to the wireless network access point 24. In a preferred embodiment, the communication circuitry 34 includes a binary (on/off), wired signal such as a signal controlled by a relay circuit. In other embodiments, communication circuitry 34 includes serial communication (RS-232 or RS-422 standards) as appreciated by those skilled in the art. In certain embodiments, the communication circuitry 34 is configured to communicate the data signals to the wireless network access point 24 in accordance with a given communication protocol, such as a cellular protocol, a wireless protocol, a radio frequency protocol, or a combination thereof. In some embodiments, the communication circuitry 34 may also be configured to receive information from the wireless network access point 24.

This invention expands upon the current computer network security paradigm, which requires two-factor authentication before permitting a client access to the network. Those skilled in the art will recognize the use of a memorized password and a random number generator token card as a common method of two-factor authentication. The combination of memorized password and random number are used to authenticate that the user is in possession of the random number generator token card. Thereby, the user is authenticated and provided access to the computer data network. The two-factor authentication approach provides a higher level of security than traditional username and password combinations, as passwords may be guessed than a random number generator. In the illustrated exemplary embodiment, detecting the presence of the rail vehicle on the track provides a primary level of user authentication (i.e. first factor). The wireless network access point 24 performs a secondary level of user authentication as part of its protocol stack (i.e. second factor).

As discussed above, the system 10 uses a software switch to discard any access attempts or other data traffic unless the rail vehicle is on the track. The software switch allows data packets to be processed by the wireless network access point 24 when the primary level of authentication (i.e. physical authentication) occurs. In another exemplary embodiment, the system 10 uses the control circuit 32 to actuate a plurality of switches to power the wireless network access point 24 and/or connect an access point antenna to a transmitter. The usage of plurality of switches of system 10 is explained in greater detail below with reference to subsequent figures.

In the illustrated embodiment, the control circuit 32 is configured to provide primary authentication of the rail vehicle on the railway track to gain temporary access to the wireless network access point 24 based on the sensed presence of the rail vehicle on the railway track. The control circuit 32 permits temporary access to the wireless network access point 24 based on the authentication of the rail vehicle. In a presently contemplated embodiment, the control circuit 32 allocates a temporal access window for accessing the network based on the speed of the rail vehicle. The temporal access window for accessing the network may be allocated, for example, for a predetermined time period based on the vehicle speed.

In certain embodiments, the control circuit 32 may further include a database, and an algorithm implemented as a computer program executed by the control circuit computer or processor. The database may be configured to store predefined information about the railroad data network. For example, the database may store information relating to railroad data network and rail vehicles as described above. The database may also include instruction sets, maps, lookup tables, variables, or the like. Such maps, lookup tables, and instruction sets, are operative to correlate characteristics of the rail vehicle to the temporal access window to gain temporary access to the railroad data network. The database may also be configured to store actual sensed/detected information pertaining to the rail vehicle. The algorithm may facilitate the processing of sensed information pertaining to the rail vehicle. Any of the above mentioned parameters may be selectively and/or dynamically adapted or altered relative to time. In one example, the time period for accessing the network when the vehicle speed is slower, is greater than the time period for accessing the network when the vehicle speed is faster.

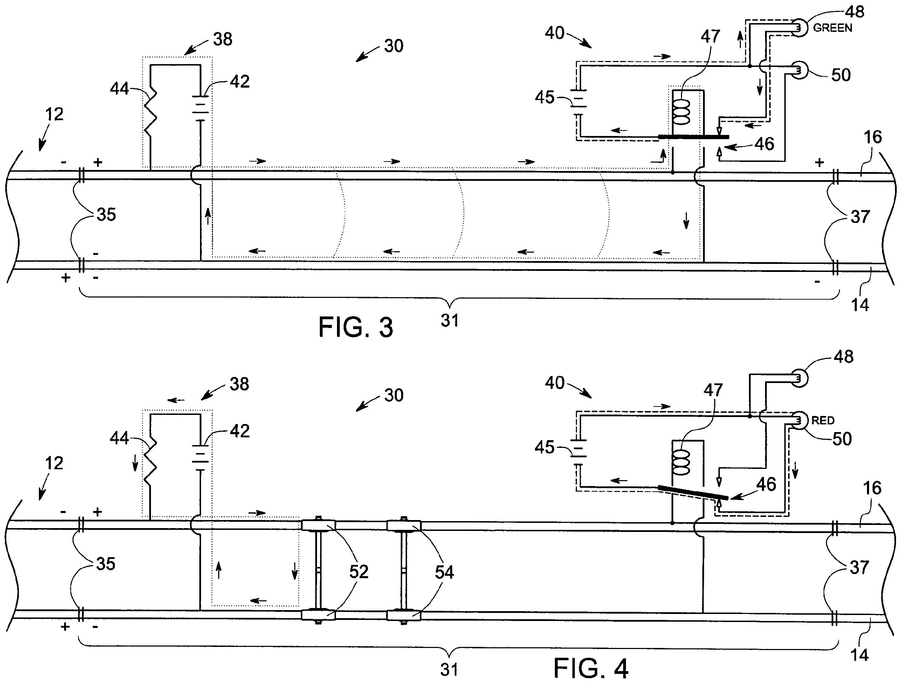

Referring to FIG. 3, the sensing device 30 configured to detect the presence of rail vehicle on the railway track 12 is illustrated. In the illustrated embodiment, the sensing device 30 is a direct current (DC) track circuit sensor. The track circuit sensor may include any suitable sensing device and technique, such as a DC track circuit sensor, an AC track circuit sensor, a pulsed AC or pulsed DC track circuit sensor, a coded AC track circuit sensor, a coded DC track circuit sensor, an audio frequency track circuit sensor, or the like. In certain embodiments, the track circuit sensor is configured and installed with a detector and a transmitter at opposite ends of a track circuit block section. In other embodiments, the track circuit sensor is configured and installed with the detector and the transmitter co-located.

The DC track circuit sensor 30 may be provided in a block section 31 formed between two insulated joints 35, 37 of the railway track 12. In the particular implementation shown, the track circuit sensor 30 includes a transmitter 38 and a receiver 40, each of which is coupled between the rails 14, 16 of the railway track 12. The transmitter 38 includes a battery 42 and a resistor 44. The receiver 40 includes a signal battery 45, a track relay coil 47, a relay armature 46, a green indicator 48, and a red indicator 50.

The track battery 42 is configured to supply current between the transmitter 38 and the receiver 40 via the block section 31 of the railway track 12. When the block section 31 of the railway track 12 is unoccupied by the rail vehicle, current flows between the transmitter 38 and the receiver 40, and the track relay coil 47 is energized, and the relay armature 46 is drawn to a closed position. As a result, current flows from the signal battery 45 to the green indicator 48, indicating that the block 31 of the track 12 is unoccupied by the rail vehicle.

Referring to FIG. 4, the track circuit sensor 30 configured to detect the presence of rail vehicle on the railway track 12 is illustrated. As described with reference to FIG. 3, the track circuit sensor 30 is provided to the block section 31 formed between two insulated joints 35, 37 of the railway track 12. The track circuit sensor 30 includes the transmitter 38 and the receiver 40, each of which is coupled between the rails 14, 16 of the railway track 12.

In the illustrated embodiment, when the block section 31 of the railway track 12 is occupied by the wheels 52, 54 of the rail vehicle, the wheels 52, 54 shunt the track circuit of the sensor 30 to prevent current flow between the transmitter 38 and the receiver 40, and the track relay coil 47 is de-energized. The relay armature 46 is then biased to an open position. As a result, current flows from the signal battery 45 to the red indicator 50. The red indicator 50 glows indicating that the block section 31 of the track 12 is occupied by the rail vehicle. In one example, the rail vehicle provides a shunt resistance less than 0.06 ohms to de-energize the track relay coil 47 and permit movement of the relay armature 46 to the open position.

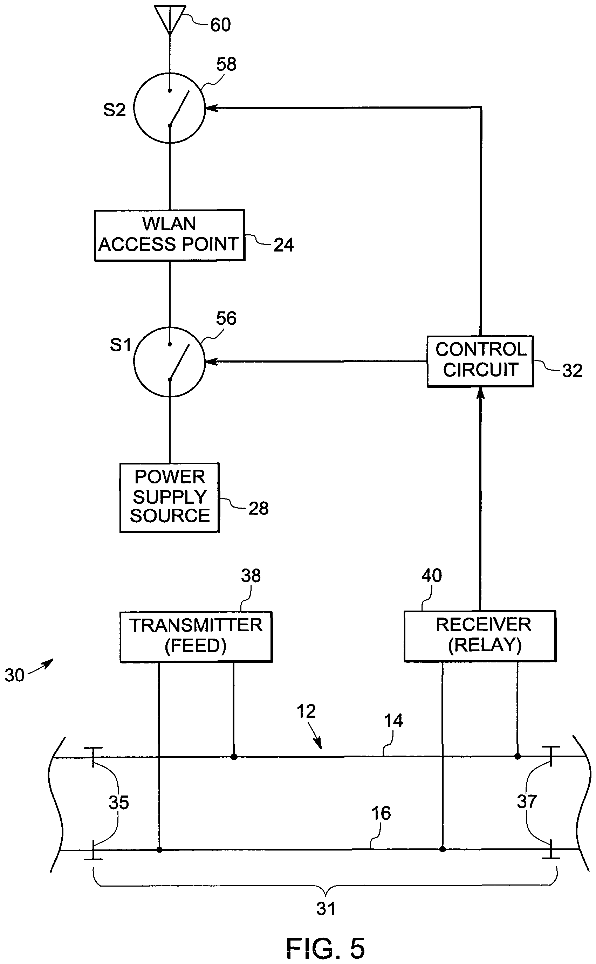

Referring to FIG. 5, the wireless railroad data network system 10 having physical switches 56, 58 are illustrated. As described above with reference to FIG. 3, the track circuit sensor 30 is provided to the block section 31 formed between two insulated joints 35, 37 of the railway track 12. The track circuit sensor 30 includes the transmitter 38 and the receiver 40, each of which is coupled between the rails 14, 16 of the railway track 12. The track battery of the transmitter 38 is configured to supply current between the transmitter 38 and the receiver 40 via the block section 31 of the railway track 12.

The control circuit 32 is communicatively coupled via switches 56, 58 to the power supply source 28 and the wireless network access point 24. In the illustrated embodiment, the control circuit 32 is configured to authenticate the rail vehicle on the railway track 12 to gain temporary access to the wireless network access point 24 based on the sensed presence of the rail vehicle on the railway track. When the presence of the vehicle on the block section 31 of the railway track 12 is detected by the track circuit sensor 30, the control circuit 32 closes the switch 56 for a predetermined time period, in order to supply electric power from the power supply source 28 to the wireless access point 24. The control circuit 32 permits temporary access to the wireless network access point 24 based on the authentication of the rail vehicle.

As described above, the wireless network access point 24 is adapted to provide temporary access to the network interface/remote monitoring center based on an output signal from the track circuit sensor. The control circuit 32 closes the switches 56, 58 to permit temporary access to the wireless network access point 24 via the antenna 60. Inputs such as train presence and speed may be used to physically enable messages, i.e. physically switch antennae in order to facilitate protocol message exchange between the user and the network access point 24. Alternately, the presence and speed inputs may be incorporated into protocol logic of the wireless access point 24 as software variables, which when set, allow protocol messages to be exchanged for processing. The control circuit 32 may open either of the switches 56, 58 to prevent access to the network. As described with reference to FIG. 2, the communication circuitry 34 is configured to exchange information with the wireless network access point 24. The wireless access point 24 receives data signals output from the communication circuitry 34 and uses these signals locally to authenticate and provide network access for the network interface 26 to the railroad data network 25.

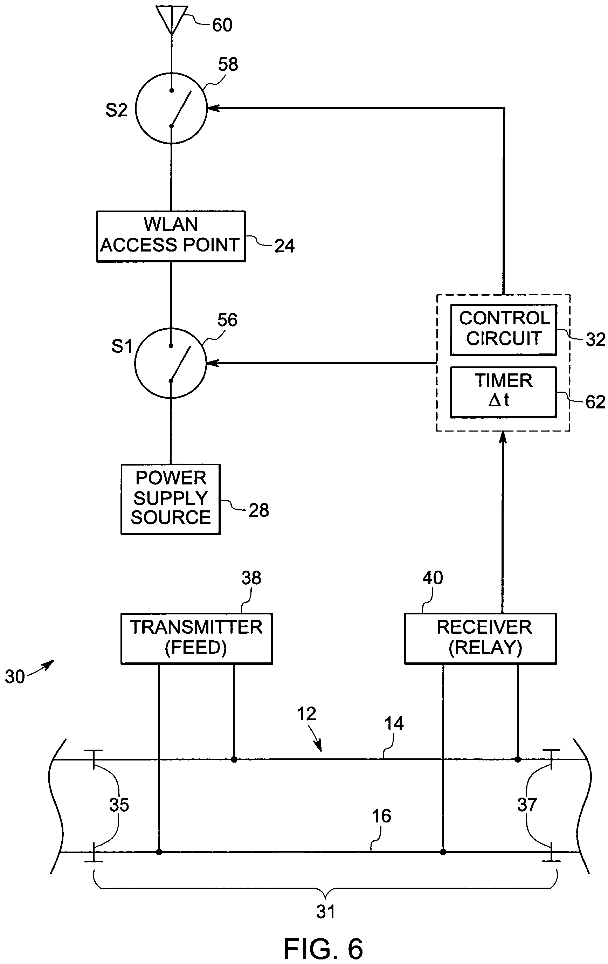

Referring to FIG. 6, the wireless rail network system 10 having physical switches 56, 58 and a timer 62 is illustrated. As described above with reference to FIG. 5, in one exemplary embodiment, the track circuit sensor 30 is provided to the block section 31 formed between two insulated joints 35, 37 of the railway track 12. The track circuit sensor 30 includes the transmitter 38 and the receiver 40, each of which is coupled between the rails 14, 16 of the railway track 12. The control circuit 32 is communicatively coupled via the switches 56, 58 to the power supply source 28 and the wireless network access point 24.

In the illustrated embodiment, the control circuit 32 is configured to initially authenticate the rail vehicle on the railway track 12 to gain temporary access to the wireless network access point 24 based on the sensed presence of the rail vehicle on the railway track. The control circuit 32 is further configured to allocate a temporal access window based on the detected train speed. The control circuit 32 actuates the timer 62 to allocate a predetermined time period for the temporal access window. The control circuit 32 permits temporary access for the predetermined time period to the wireless network access point 24 based on the authentication of the rail vehicle.

Use of the timer 62 facilitates preserving security and limiting access to the wireless access network during various periods. For example, access would be limited for short durations should the track circuit be defeated by connecting jumper cables across the rails; a rail break which causes the track circuit, by failsafe design, to indicate the track circuit as occupied by a train i.e. a broken rail "looks" the same as a train present to the track circuit sensor, or the like. Use of the timer 62 also allows use of train detection devices, such as a wheel counter or cut-light detector, that are responsive to rail vehicles passing a specific, discrete location rather than occupying a section of track (e.g. track circuit).

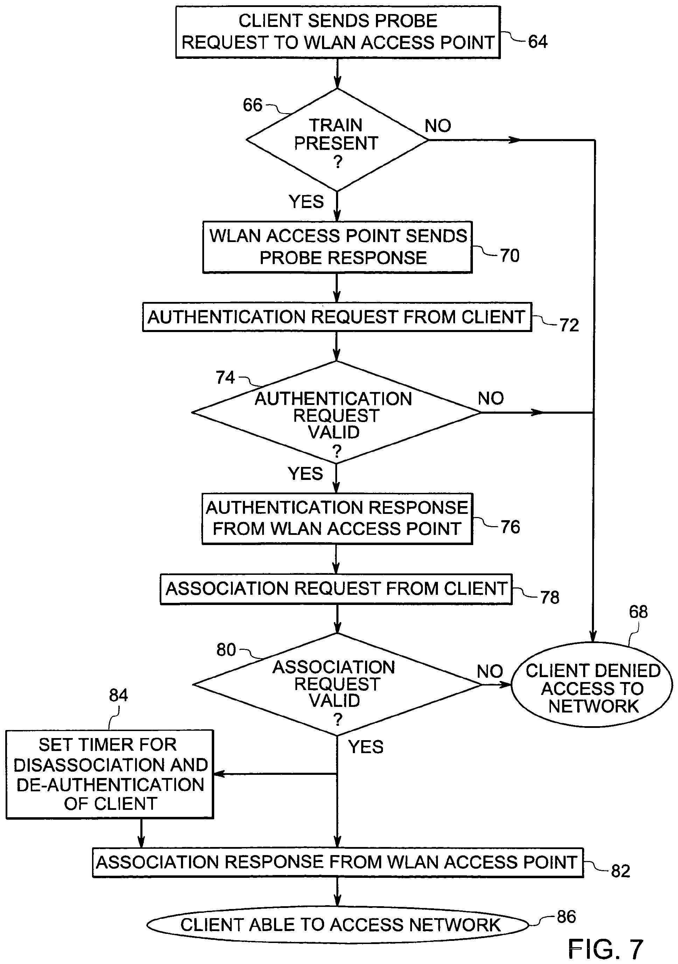

Referring to FIG. 7, a flow chart illustrating exemplary steps involved in accessing the wireless railroad data network is illustrated. The illustrated embodiment describes the authentication and association functions performed by 802.11 wireless networking media access control to add users to the wireless railroad data network with additional software parameters to incorporate primary authentication of the train (i.e. train presence). In accordance with the particular method illustrated, a user sends a probe request to the wireless network access point 24, as represented by step 64. The probe request may include information relating permission to access the network.

The method further includes detecting presence of a rail vehicle on the railway track 12, as represented by step 66. If the track circuit sensor 30 does not indicate the presence of the rail vehicle on the predetermined block section 31 of the railway track 12, the control circuit 32 denies access to the network, as represented by step 68. The method also includes sending the corresponding response for the probe request from the network access point 24 to the user, as represented by step 70, if the track circuit sensor 30 indicates the presence of the rail vehicle on the predetermined block section 31 of the railway track 12.

The method further includes sending an authentication request from the user to the control circuit 32, as represented by step 72. In one example, the IEEE 802.11 protocol defines the formats and contents of authentication messages. The other examples of authentication protocols may include password authentication protocols (PAP), challenge-handshake authentication protocols (CHAP), or the like as appreciated by those skilled in the art. The authentication request is checked for validity, as represented by step 74. The authentication request may include passwords, encrypted keys, or the like as known to those skilled in the art. If the authentication request is not valid, the user is denied access to the network. The network access point 24 sends a response for the authentication request to the user, if the authentication request is valid, as represented by step 76. As described above, the control circuit 32 is configured to provide a primary authentication of the rail vehicle on the railway track to gain temporary access to the wireless network access point 24 based on the sensed presence of the rail vehicle on the railway track. The control circuit 32 permits temporary access to the wireless network access point 24 based on the authentication of the rail vehicle.

The method further includes sending an association request from the user to the control circuit 32, as represented by step 78. The authentication request described above, and the association request are normal messages defined by the applicable protocol. The association request is checked for validity, as represented by step 80. If the association request is not valid, the user is denied access to the network. If the association request is valid, the network access point 24 sends a response for the association request to the user, as represented by step 82.

Alternately, if the association request is valid, the control circuit 32 is adapted to actuate the timer 62, for dis-associating and de-authenticating the user from accessing the network, as represented by step 84. In this particular embodiment, the control circuit 32 allocates a temporal access window for accessing the network based on the speed of the rail vehicle. The temporal access window for accessing the network is allocated for a predetermined time period based on the vehicle speed. The method also includes permitting temporary access to the wireless network access point 24 based on the sensed presence and authentication of the rail vehicle, as represented by step 86.

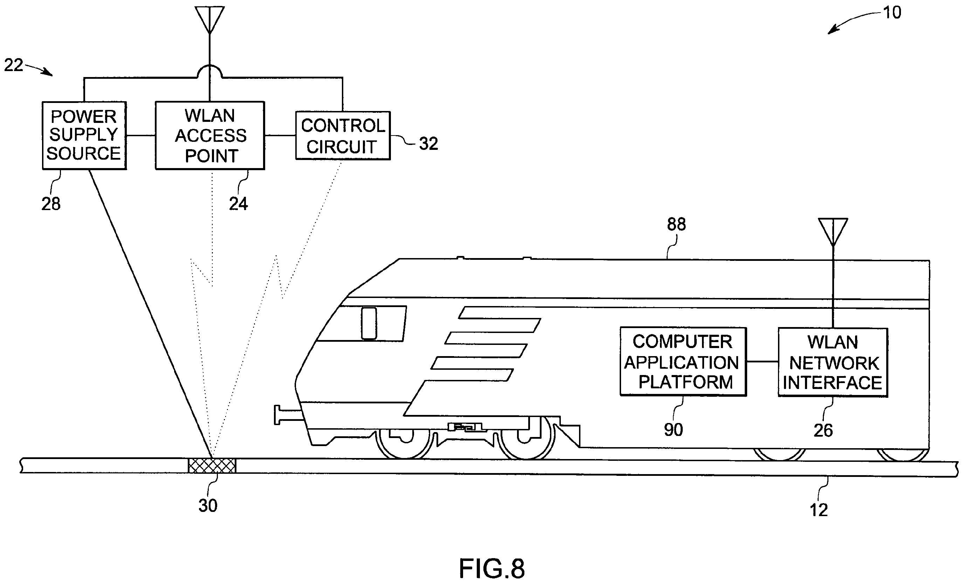

Referring to FIG. 8, the system 10 for accessing wireless rail network based on sensed presence of a locomotive 88 on the railway track 12 is illustrated. The vehicle detection circuitry 22 includes the power supply 28, the sensing device 30, and the control circuit 32. The wireless network access point 24 is communicatively coupled to the detection circuitry 22 and is adapted to provide temporary access to a network interface/remote monitoring center 26 based on an output signal from the detection circuitry 22. The wireless network access point 24 uses radio frequency, optical or other propagating (rather than conducted by wire) signals to communicate with the wireless network interface 26 on the locomotive 88. The network interface 26 is configured to exchange data between the wireless access point 24 and the locomotive 88. The power supply 28 is configured to supply electric power to the sensing device 30, the control circuit 32, and the wireless access point 24. The wireless access point 24 may receive data signals output from the control circuit 32 and transmit these data signals to the remote monitoring center via a wired connection port or a short range wireless link.

In the illustrated embodiment, the control circuit 32 is configured to authenticate the locomotive 88 on the railway track 12 to gain temporary access to the wireless network access point 24 based on the sensed presence of the locomotive 88. The control circuit 32 permits temporary access to the wireless network access point 24 based on the authentication of the locomotive. The control circuit 32 allocates a temporal access window for accessing the network based on the speed of the locomotive. The temporal access window for accessing the network is allocated for a predetermined time period based on the locomotive speed. The locomotive 88 provided with a computer application platform 90, which executes the software and logic instructions responsible for coordinating the exchange of data between the railroad data network, the railroad data center, and the locomotive 88.

Referring generally to above mentioned FIGS 1-8, in accordance with several aspects of the present technique, the system and method for accessing wireless railroad data network facilitates secure access to the rail network. Rail vehicle is authenticated to gain temporary access to the wireless rail network based on sensed presence of the rail vehicle on the rail track. The rail vehicle is permitted temporary access to the wireless rail network based on sensed presence and authentication of the rail vehicle. While only certain features of the invention have been illustrated and described herein, many modifications and changes will occur to those skilled in the art. It is, therefore, to be understood that the appended claims are intended to cover all such modifications and changes as fall within the scope of the invention.

### ELEMENT LIST

10: wireless rail network system
12: railway track
14: left rail
16: right rail
18: tie
20: equipment container
22: vehicle detection circuitry
24: wireless network access point
25: railroad data network
26: network interface
27: railroad data center
28: power supply
30: sensing device
31: block section
32: control circuit
34: communication circuitry
35: insulated joint
36: processor
37: insulated joint
38: transmitter
40: receiver
42: battery
44: resistor
45: signal battery
46: relay armature
47: track relay coil
48: green indicator
50: red indicator
52: wheel
54: wheel
56: physical switch
58: physical switch
60: antenna
62: timer
64: step to send probe request to network access point
66: step to check train presence
68: step to deny access to network
70: step to send probe response
72: authentication request from client
74: check for validity of authentication request
76: authentication response from network access point
78: association request from client
80: step to check association request validity
82: association response from network access point
84: set timer for disassociation and de-authentication of client
86: client able to access network
88: locomotive
90: computer application platform

## Claims

1. A method for accessing a wireless railroad data network (25), **characterized in that** the method comprises:
sensing presence of a rail vehicle on a rail track (12);
authenticating the rail vehicle to gain temporary access to the wireless railroad data network (25) based on sensed presence of the rail vehicle on the rail track (12); and
permitting temporary access by the rail vehicle to the wireless railroad data network (25) based on sensed presence and authentication of the rail vehicle.

2. The method of claim 1, wherein permitting temporary access to the wireless railroad data network (25) comprises allocating a temporal access window for accessing the wireless railroad data network (25).

3. The method of claim 2, wherein the temporal access window is allocated based on rail vehicle speed.

4. A system for accessing a wireless railroad data network (25), **characterized in that** the system comprises:
a detection circuitry (22) configured to detect presence of a rail vehicle on a rail track (12);
a wireless network interface (26) configured to receive and transmit rail vehicle data; and
a wireless network access point (24) coupled to the detection circuitry (22) and configured to provide temporary access to the network interface (26) based on a signal from the detection circuitry (22).

5. The system of claim 4, wherein the detection circuitry (22) comprises a control circuit (32) communicatively coupled to the wireless network access point (24) and configured to authenticate the rail vehicle to gain temporary access to the wireless railroad data network (25) based on sensed presence of the rail vehicle on the rail track (12).

6. The system of claim 5, wherein the control circuit (32) is configured to allocating a temporal access window for accessing the wireless railroad data network (25).

7. A wireless railroad data network system (10) comprising:
a detection circuitry (22) configured to detect presence of a rail vehicle on a rail track (12);
a wireless network interface (26) configured to receive and transmit data with a rail vehicle;
a wireless network access point (24) coupled to the detection circuitry (22) and configured to provide temporary access to the network interface (26) based on a signal from the detection circuitry (22); and
an electric power source (28) configured to supply electric power to the wireless network access point (24) based on the signal from the detection circuitry (22).

8. The system (10) of claim 7, wherein the detection circuitry (22) comprises a control circuit (32) communicatively coupled to the wireless network access point (24) and configured to authenticate the rail vehicle to gain temporary access to the wireless network access point (24) based on sensed presence of the rail vehicle on the rail track (12).

## Patentansprüche

1. Verfahren zum Zugreifen auf ein drahtloses Eisenbahn-Datennetzwerk (25), dadurch charakterisiert, dass das Verfahren aufweist:
Detektieren der Präsenz eines Schienenfahrzeugs auf einer Schiene (12);
Authentifizieren des Schienenfahrzeugs, um temporären Zugriff auf das drahtlose Eisenbahn-Datennetzwerk (25) zu bekommen, basierend auf der detektieren Präsenz des Schienenfahrzeugs auf der Schiene (12);
und
Erlauben des temporären Zugriffs durch das Schienenfahrzeug auf das drahtlose Eisenbahn-Datennetzwerk (25) basierend auf detektierter Präsenz und Authentifizierung des Schienenfahrzeugs.

2. Verfahren von Anspruch 1, wobei Erlauben des temporären Zugriffs auf das drahtlose Eisenbahn-Datennetzwerk (25) das Allokieren eines zeitlichen Zugriffsfensters zum Zugreifen auf das drahtlose Eisenbahn-Datennetzwerk (25) aufweist.

3. Verfahren von Anspruch 2, wobei das zeitliche Zugriffsfenster basierend auf einer Schienenfahrzeuggeschwindigkeit allokiert wird.

4. System zum Zugreifen auf ein drahtloses Eisenbahn-Datennetzwerk (25), dadurch charakterisiert, dass das System aufweist:
Eine Detektionsschaltung (22), eingerichtet zum Detektieren der Präsenz eines Schienenfahrzeugs auf einer Schiene (12);
Eine Drahtloses-Netzwerk-Schnittstelle (26), eingerichtet zum Empfangen und Senden von Schienenfahrzeugdaten; und
Einen Drahtloses-Netzwerk-Zugriffsknoten (24), der mit der Detektionsschaltung (22) gekoppelt ist und eingerichtet ist, basierend auf einem Signal von der Detektionsschaltung (22) einen temporären Zugriff auf die Netzwerk-Schnittstelle (26) bereitzustellen.

5. Das System von Anspruch 4, wobei die Detektionsschaltung (22) eine Steuerschaltung (32) aufweist, die kommunikativ mit dem Drahtloses-Netzwerk-Zugriffsknoten (24) gekoppelt ist und eingerichtet ist, das Schienenfahrzeug basierend auf der detektieren Präsenz des Schienenfahrzeugs auf der Schiene (12) zu authentifizieren, um temporären Zugriff auf das Eisenbahn-Datennetzwerk (25) zu bekommen.

6. System von Anspruch 5, wobei die Steuerschaltung (32) eingerichtet ist, ein zeitliches Zugriffsfenster zum Zugreifen auf das drahtlose Eisenbahn-Datennetzwerk (25) zu allokieren.

7. Ein Drahtloses-Eisenbahn-Datennetzwerk-System (10) aufweisend:
Eine Detektionsschaltung (22), eingerichtet zum Detektieren der Präsenz eines Schienenfahrzeugs auf einer Schiene (12);
Eine Drahtloses-Netzwerk-Schnittstelle (26), eingerichtet zum Empfangen und Senden von Schienenfahrzeugdaten;
Einen Drahtloses-Netzwerk-Zugriffsknoten (24), der mit der Detektionsschaltung (22) gekoppelt ist und eingerichtet ist, basierend auf einem Signal von der Detektionsschaltung (22) einen temporären Zugriff auf die Netzwerk-Schnittstelle (26) bereitzustellen; und
Eine elektrische Energiequelle (28), eingerichtet zum Liefern von elektrischer Energie an den Drahtloses-Netzwerk-Zugriffsknoten (24) basierend auf dem Signal von der Detektionsschaltung (22).

8. Das System (10) von Anspruch 7, wobei die Detektionsschaltung (22) eine Steuerschaltung (32) aufweist, die kommunikativ mit dem Drahtloses-Netzwerk-Zugriffsknoten (24) gekoppelt ist und eingerichtet ist, das Schienenfahrzeug basierend auf der detektieren Präsenz des Schienenfahrzeugs auf der Schiene (12) zu authentifizieren, um temporären Zugriff auf das Eisenbahn-Datennetzwerk (25) zu bekommen.

## Revendications

1. Procédé d'accès à un réseau de données de chemin de fer sans fil (25), **caractérisé en ce que** le procédé comprend les étapes ci-dessous consistant à :
détecter la présence d'un véhicule ferroviaire sur une voie ferrée (12) ;
authentifier le véhicule ferroviaire en vue d'obtenir un accès temporaire au réseau de données sans fil (25) sur la base de la présence détectée du véhicule ferroviaire sur la voie ferrée (12) ; et
permettre l'accès temporaire du véhicule ferroviaire au réseau de données de chemin de fer sans fil (25) sur la base de la présence détectée et de l'authentification du véhicule ferroviaire.

2. Procédé selon la revendication 1, dans lequel l'étape consistant à permettre un accès temporaire au réseau de données de chemin de fer sans fil (25) comprend l'étape consistant à affecter une fenêtre d'accès temporelle pour accéder au réseau de données de chemin de fer sans fil (25).

3. Procédé selon la revendication 2, dans lequel la fenêtre d'accès temporelle est affectée sur la base d'une vitesse du véhicule ferroviaire.

4. Système destiné à accéder à un réseau de données de chemin de fer sans fil (25), **caractérisé en ce que** le système comprend :
un montage de circuits de détection (22) configuré de manière à détecter la présence d'un véhicule ferroviaire sur une voie ferrée (12) ;
une interface de réseau sans fil (26) configurée de manière à recevoir et à transmettre des données de véhicule ferroviaire ; et
un point d'accès de réseau sans fil (24) couplé au montage de circuits de détection (22) et configuré de manière à fournir un accès temporaire à l'interface de réseau (26) sur la base d'un signal provenant du montage de circuits de détection (22).

5. Système selon la revendication 4, dans lequel le montage de circuits de détection (22) comprend un circuit de commande (32) couplé en communication au point d'accès de réseau sans fil (24) et configuré de manière à authentifier le véhicule ferroviaire en vue d'obtenir un accès temporaire au réseau de données de chemin de fer sans fil (25) sur la base de la présence détectée du véhicule ferroviaire sur la voie ferrée (12).

6. Système selon la revendication 5, dans lequel le circuit de commande (32) est configuré de manière à affecter une fenêtre d'accès temporelle pour accéder au réseau de données de chemin de fer sans fil (25).

7. Système de réseau de données de chemin de fer sans fil (10) comprenant :
un montage de circuits de détection (22) configuré de manière à détecter la présence d'un véhicule ferroviaire sur une voie ferrée (12) ;
une interface de réseau sans fil (26) configurée de manière à recevoir et à transmettre des données avec un véhicule ferroviaire ;
un point d'accès de réseau sans fil (24) couplé au montage de circuits de détection (22) et configuré de manière à fournir un accès temporaire à l'interface de réseau (26) sur la base d'un signal provenant du montage de circuits de détection (22) ; et
une source d'énergie électrique (28) configurée de manière à fournir de l'énergie électrique au point d'accès de réseau sans fil (24) sur la base du signal provenant du montage de circuits de détection (22).

8. Système (10) selon la revendication 7, dans lequel le montage de circuits de détection (22) comprend un circuit de commande (32) couplé en communication au point d'accès de réseau sans fil (24) et configuré de manière à authentifier le véhicule ferroviaire en vue d'obtenir un accès temporaire au point d'accès de réseau sans fil (24) sur la base de la présence détectée du véhicule ferroviaire sur la voie ferrée (12).
